# EUROPÄISCHE PATENTSCHRIFT

(11) **EP 3 209 544 B1**
(45) Veröffentlichungstag und Bekanntmachung des Hinweises auf die Patenterteilung: **15.01.2020**
(21) Anmeldenummer: 15760422.4
(22) Anmeldetag: 27.08.2015
(51) Int. Cl.: B62M 11/12, B62M 6/55, F16H 15/20

(54) **KOAXIAL ANGEORDNETES REIBRINGGETRIEBE FÜR EIN MIT MOTORKRAFT UND/ODER PEDALKRAFT BETREIBBARES FAHRZEUG**
COAXIALLY ARRANGED FRICTION RING-TYPE TRANSMISSION FOR A VEHICLE OPERATED BY MOTOR AND/OR PEDAL FORCE
TRANSMISSION À ANNEAU DE FRICTION DISPOSÉ COAXIALEMENT POUR UN VÉHICULE ACTIONNABLE PAR UNE FORCE MOTRICE ET/OU UNE FORCE DE PÉDALES

(30) Priorität: 23.10.2014 DE 102014221512
(43) Veröffentlichungstag der Anmeldung: 30.08.2017
(73) Patentinhaber: Robert Bosch GmbH, 70442 Stuttgart (DE)
(72) Erfinder: HINTERKAUSEN, Markus, 71701 Schwieberdingen (DE); KIMMICH, Peter, 71144 Steinenbronn (DE); HILZINGER, Juergen, 71272 Renningen (DE)
(86) Internationale Anmeldenummer: PCT/EP2015/069647
(87) Internationale Veröffentlichungsnummer: WO 2016/062436

(56) Entgegenhaltungen:
- WO-A1-2014/026754
- WO-A1-2014/172422
- WO-A2-2007/061993
- DE-A1-102012 023 150
- DE-A1-102012 209 096
- DE-A1-102013 206 710
- FR-A1- 2 988 796
- US-A- 4 158 317
- US-A- 5 375 865
- US-A1- 2001 024 993

## Beschreibung

### Stand der Technik

Die vorliegende Erfindung betrifft Reibringgetriebe (2) für ein mit Motorkraft und/oder Pedalkraft betreibbares Fahrzeug, wobei das Reibringgetriebe insbesondere in einem Elektrofahrrad (100) mit einem Elektromotor (6) eingesetzt werden kann. Das Reibringgetriebe umfasst eine Kurbelwelle für Tretkurbeln, einen inneren Reibring und einen äußeren Reibring sowie mindestens eine auf einem Rollenträger angeordnete drehbare Doppelkegelrolle, die mit dem inneren und dem äußeren Reibring in Reibeingriff steht.

Im Stand der Technik sind mit Motorkraft und/oder Pedalkraft betreibbare Fahrzeuge mit einem Reibringgetriebe bekannt, das beispielsweise nach dem Grundprinzip des Doppelkegel-Reibringgetriebes arbeitet. Gemäß der DE 10 2012 209 096 A1 ist ein solches Getriebe in Tretlagernähe und in achsparalleler Anordnung zur Kurbelwelle in einen Pedelec/eBike-Antrieb integriert. Dadurch wird eine stufenlose Übersetzungsänderung im Fahrradantrieb ermöglicht. Diese DE 10 2012 209 096 A1 offenbart die Merkmale der Oberbegriffe der Ansprüche 1 und 7.

Die WO2014/026754A1 beschreibt ein Fahrradgetriebe, welches ein Doppelkegel-Reibringgetriebe umfasst, das ebenfalls achsparallel zur Kurbelwelle und in Tretlagernähe angeordnet ist.

Nachteilig am Stand der Technik ist, dass die bisher vorgeschlagenen Getriebeeinheiten für das Tretlager aufgrund ihrer Konstruktionsweise recht voluminös sind. Dies hat Nachteile im Sinne des Leichtbaus und behindert außerdem die Konstruktionsfreiheit der Fahrradhersteller.

### Offenbarung der Erfindung

Die Erfindung betrifft ein Reibringgetriebe gemäß Anspruch 1 und ein Fahrzeug gemäß Anspruch 7.

Die Unteransprüche zeigen bevorzugte Weiterbildungen der Erfindung.

In einer Ausführungsform umfasst das Reibringgetriebe ein Kettenrad oder eine Riemenscheibe, von der aus das Hinterrad vorzugsweise mit einem Zugmittel angetrieben wird. Dieses Kettenrad oder die Riemenscheibe sind ebenso wie das Reibringgetriebe koaxial zu der Kurbelwelle angeordnet. Auch dies trägt zu einer kompakten Bauweise der Antriebseinheit bei.

Erfindungsgemäß ist ein Gehäuse des Reibringgetriebes feststehend ausgeführt. Dies bedeutet, dass das Gehäuse nicht mit inneren Komponenten des Antriebes, insbesondere des Reibringgetriebes, umläuft. Nach außen ist somit bevorzugt nur ein Abtriebeselement, also z.B. das Kettenrad oder die Riemenscheibe, sowie die Kurbelwelle beweglich. Dies vergrößert die Sicherheit und bietet einem Konstrukteur viele Möglichkeiten der Befestigung der Antriebseinheit an dem Fahrrad.

Erfindungsgemäß weist das Reibringgetriebe eine Verstelleinrichtung für dessen Übersetzungsverhältnis auf, deren Verstellbahn erfindungsgemäß entlang des Gehäuses des Reibringgetriebes verläuft, wenigstens näherungsweise linear. Erfindungsgemäß verläuft die Verstelleinrichtung nicht koaxial zu dem Reibringgetriebe, insbesondere nicht im Inneren der Kurbelwelle. Sie weist erfindungsgemäß kein Verstellgewinde auf. Die Verstelleinrichtung verläuft besonders bevorzugt durch das Gehäuse hindurch, sodass ein Betätigungsmechanismus außerhalb des Gehäuses, insbesondere an oder auf einer radialen Außenoberfläche des Gehäuses angeordnet sein kann. Die Verstelleinrichtung arbeitet bevorzugt stufenlos.

In einer weiteren Ausführungsform ist die Verstelleinrichtung mittels eines Stellmotors angetrieben. Auf diese Weise kann die Verstellung der Übersetzung beispielsweise in ein integriertes Management-System für die Antriebseinheit integriert werden. Der Stellmotor kann am Außenumfang oder in der Nähe des Außenumfangs des Reibringgetriebes angeordnet sein. Es außerdem denkbar, den Stellmotor unabhängig von dem Reibringgetriebe in oder an dem Fahrzeug anzuordnen, wobei der Stellmotor bevorzugt mit einer Fernwirkeinrichtung wie etwa einem Bowdenzug oder einem Stellgestänge mit dem Reibringgetriebe verbunden ist.

In einer weiteren Ausführungsform ist die Drehzahl des Reibringgetriebes gegenüber der Drehzahl der Kurbelwelle erhöht, indem dem Reibringgetriebe ein Vorgetriebe mit einer Übersetzung vorgeschaltet ist. Insbesondere kann das Vorgetriebe als Planetengetriebe ausgeführt sein. Ein Vorteil der erhöhten Drehzahl des Reibringgetriebes ist, dass dieses bei gleicher Leistung geringere Drehmomente übertragen muss. Es kann daher filigraner ausgeführt werden als ohne das Vorgetriebe. Wenn die Kraft des Motors an einer Stelle in den Energiefluss durch die Getriebe eingekoppelt wird, der mit erhöhter Drehzahl läuft, kann auch der Motor mit höherer Drehzahl laufen, wodurch er bei gleicher Leistung leichter und kleiner ausgeführt sein kann. Insbesondere hat der Motor eine höhere Maximaldrehzahl. Auch das Motorgetriebe kann in manchen Fällen kompakter ausgestaltet werden, weil es z.B. bei gleicher Motordrehzahl ein geringeres Übersetzungsverhältnis aufweisen und geringere Drehmomente übertragen muss. Alternativ kann das Übersetzungsverhältnis beibehalten werden, sodass die Motordrehzahl erhöht wird. Der Motor kann dann bei gleicher Leistung kleiner und leichter ausgeführt sein. Besonders bevorzugt wird Energie von dem Motor am Abtrieb des Vorgetriebes eingekoppelt. Außerdem kann das Vorgetriebe die Drehrichtung der Rotation umkehren, was im Anschluss von dem Reibringgetriebe wieder rückgängig gemacht werden kann.

In einer weiteren Ausführungsform weist die Antriebseinheit im Kraftfluss nach dem Reibringgetriebe ein Nachgetriebe auf, welches die Drehzahl des Abtriebs des Reibringgetriebes verringert und sie insbesondere begrenzt. Dadurch wird ein geeignetes Drehmoment am Abtrieb der Antriebseinheit erreicht. Das Nachgetriebe kann als Planetengetriebe ausgeführt sein. Das Planetengetriebe ist bevorzugt so eingebunden, dass keine Drehrichtungsumkehr stattfindet. Insbesondere ist das Hohlrad feststehend und das Sonnenrad angetrieben, sodass der Planetenträger den Abtrieb bildet.

In einer nicht beanspruchten Variante umfasst die Antriebseinheit ein Summierrad, an welchem Drehmoment aus der Kurbelwelle, das mit Pedalkraft erzeugt wird, und Drehmoment aus dem Motor addiert werden. Das Summierrad ist insbesondere ein Zahnrad, in das Drehmoment von dem Motor über Eingriff eines mit dem Motor leistungsübertragend verbundenen Zahnrades eingebracht wird. Die Einleitung des Drehmomentes aus der Kurbelwelle erfolgt bevorzugt zentral aus einer Welle oder aus einem anderen Element, dessen Mittelachse mit der des Summierrades zusammenfällt, und das drehfest mit dem Summierrad verbunden ist. Besonders bevorzugt ist ein Hohlrad eines als Planetengetriebe ausgeführten Vorgetriebes im Inneren des Summierzahnrades angeordnet. Eine solche Positionierung des Hohlrades zu dem Summierrad verringert vorteilhaft die axiale Baulänge des Getriebes. Das Summierrad kann um einen Antriebsreibring des Reibringgetriebes, insbesondere einen äußeren Reibring herum angeordnet sein. An dieser Position ist die Drehzahl des Summierrades im Vergleich zu der Kurbelwellendrehzahl erhöht, sodass auch die Motordrehzahl höher sein kann. Dann kann der Motor leichter und kompakter ausgeführt sein.

In einer nicht beanspruchten Variante ist zwischen den Motor und das Summierrad ein Zwischengetriebe geschaltet, welches eine Erhöhung der Drehzahl des Motors bewirkt. Insbesondere ist der Motor ein Elektromotor, welcher, wenn er für höhere Drehzahlen und ein geringeres Drehmoment ausgelegt ist, bei gleicher Leistung kompakter und leichter sein kann. Das Zwischengetriebe kann nicht-konzentrisch zu dem Reibring und der Kurbelwelle angeordnet sein. Das Zwischengetriebe kann auf das Summierrad der Antriebseinheit einwirken. Zahnräder des Zwischengetriebes können Stirnräder sein.

In einer weiteren Ausführungsform umfasst das Fahrzeug einen Freilauf, welcher trotz einer starren Kopplung des Motors mit dem Getriebe ermöglicht, die Kurbelwelle unabhängig von dem Motor zu bewegen, wenn dessen äquivalente Drehzahl höher ist als die der Kurbelwelle. Der Freilauf ermöglicht weiter, die Kurbelwelle rückwärts zu bewegen oder nicht zu bewegen, obwohl der Motor und/oder das Fahrzeug vorwärts laufen. Bevorzugt ist der Freilauf im Kraftfluss zwischen der Kurbelwelle und einem sich daran anschließenden Kraftübertragungselement angeordnet. Der Freilauf hat bevorzugt einen so geringen Durchmesser, dass er im Inneren eines anderen Bauteils anordenbar ist. Insbesondere ist er im Inneren des Sonnenradrad eines Vorgetriebes angeordnet. Der Freilauf kann sich bis in das Reibringgetriebe erstrecken. Durch die Anordnung im Inneren eines anderen Elements kann axiale Baulänge eingespart werden. Insbesondere ist weiter ein Freilauf, insbesondere derselbe Freilauf wie zwischen dem Reibringgetriebe und der Kurbelwelle, in einem Kraftfluss von dem Motor zu der Kurbelwelle angeordnet. Der Freilauf kann beispielsweise ein Sperrklinkenfreilauf sein.

In einer weiteren Ausführungsform sind mehrere parallel geschaltete Freiläufe mit derselben Funktion und an derselben Stelle im Kraftfluss angeordnet. Dies ermöglicht, ein höheres Drehmoment zu übertragen und/oder die einzelnen Freiläufe müssen weniger Drehmoment übertragen, sodass kompaktere Ausführungen, insbesondere mit geringem Durchmesser, eingesetzt werden können. Die Freiläufe sind bevorzugt in einer Reihe nebeneinander angeordnet. Insbesondere werden zwei oder drei Freiläufe verwendet.

Nachfolgend werden Ausführungsbeispiele der Erfindung unter Bezugnahme auf die begleitenden Zeichnungen im Detail beschrieben. In den Zeichnungen ist:
- Figur 1: eine schematische Darstellung eines Elektrofahrrades, welches eine Ausführungsform einer Antriebseinheit mit einem erfindungsgemäßen Reibringgetriebe aufweist,
- Figur 2: eine perspektivische Ansicht einer integrierten Antriebseinheit mit einem erfindungsgemäßen Reibringgetriebe,
- Figur 3: eine perspektivische Ansicht einer integrierten Antriebseinheit in der in Figur 2 gezeigten Ausführungsform ohne ein das Reibringgetriebe umgebendes Gehäuse,
- Figur 4: einen Querschnitt entlang einer Mittelachse des Rollenträgers durch die in Figur 3 gezeigte Getriebeeinheit einschließlich Summierzahnrad, Vorgetriebe, Reibringgetriebe und Nachgetriebe, und
- Figur 5: vergrößert ein Detail mit einer Doppelkegelrolle aus dem in Figur 4 gezeigten Querschnitt.

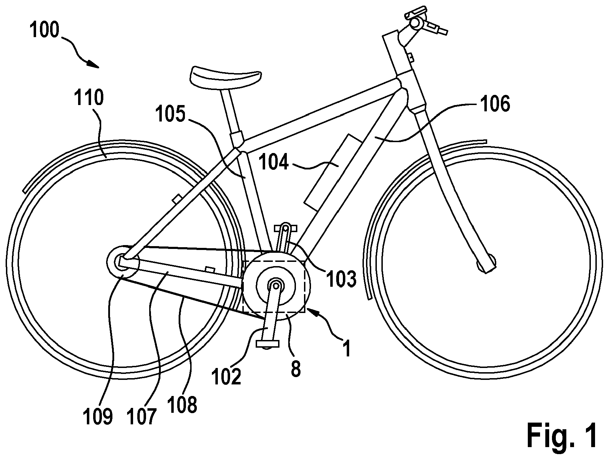

Figur 1 zeigt schematisch ein Elektrofahrrad 100, in welchem eine Antriebseinheit 1 zentral an dem Rahmen angeordnet ist. Insbesondere laufen an oder nahe der Antriebseinheit 1 das Sitzrohr 105, das Unterrohr 106 und die Kettenstrebe 107 zusammen. Die Lagerung der Kurbelwelle für die Pedalarme 102 und 103 ist in die Antriebseinheit 1 integriert. Die Antriebseinheit weist ein Kettenrad 8 auf, welches den Abtrieb der Antriebseinheit 1 darstellt. Das Kettenrad 8 überträgt ein Drehmoment von der Antriebseinheit 1 über eine Kette 108 und ein Kettenritzel 109 zu einem Hinterrad 110. Die Antriebseinheit 1 umfasst einen nicht explizit dargestellten Elektromotor. Der Elektromotor kann mit Energie aus einer Batterie 104 versorgt werden.

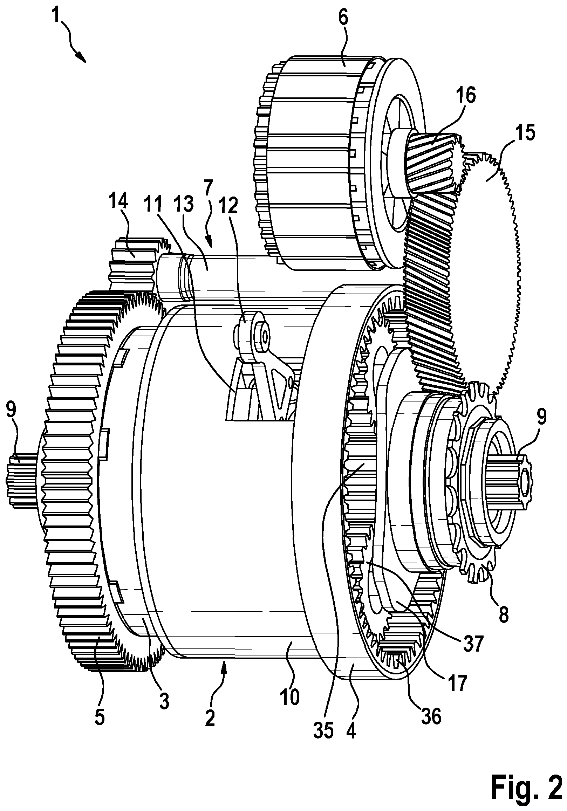

Figur 2 zeigt in einer perspektivischen Ansicht eine integrierte Antriebseinheit 1, welche ein Reibringgetriebe 2, ein Vorgetriebe 3, ein Nachgetriebe 4, ein Summierzahnrad 5, einen Elektromotor 6, ein Zwischengetriebe 7, einen Abtrieb 8 und eine Kurbelwelle 9 aufweist. Die Kurbelwelle 9 ist ohne ihre Kurbeln dargestellt, welche jeweils auf eine Zahnverbindung am Ende der Kurbelwelle 9 aufgesteckt werden können, wobei auch andere Verbindungsarten denkbar sind. Das Reibringgetriebe 2 weist ein Gehäuse 10 auf, welches das Reibringgetriebe 2 bis auf einen Durchbruch 11 zumindest radial umgibt. Durch den Durchbruch 11 ragt aus dem Inneren des Gehäuses als Teil des Reibringgetriebes ein Verstellhebel 12 hervor. Dieser ist in Längsrichtung der Kurbelwelle 9 verschieblich, wodurch das Übersetzungsverhältnis des Reibringgetriebes 2 einstellbar ist. Der Verstellweg der mit dem Verstellhebel 12 ausgeführten Verstelleinrichtung verläuft somit in Bezug auf den Verstellhebel 12 im Inneren des Durchbruchs 11 und in Längsrichtung der Kurbelwelle 9. Der Verstellweg ist wenigstens näherungsweise linear.

Das Zwischengetriebe 7 umfasst eine Zwischenwelle 13, an deren einem Ende ein Ritzel 14 angeordnet ist, welches mit dem Summierzahnrad 5 kämmt. Die Lagerung der Zwischenwelle 13 ist nicht dargestellt. Das Ritzel 14 hat einen erheblich kleineren Durchmesser als das Summierzahnrad 5. Am anderen Ende der Zwischenwelle 13 ist ein Zwischenzahnrad 15 mit erheblich größerem Durchmesser als das Ritzel 14 angeordnet. Das Zwischenzahnrad 15 kämmt mit einem Abtriebszahnrad 16 eines Elektromotors 6, der Teil der Antriebseinheit 1 ist. Auf diese Weise wird über das Zwischengetriebe 7 eine erhebliche Untersetzung der Drehzahl des Elektromotors 6 zu der Drehzahl des Summierzahnrades 5 bewirkt. Durch die hohe Drehzahl kann der Elektromotor 6 bei gleicher Leistung vergleichsweise klein und kompakt ausgeführt werden. Eine mechanische Verbindung zwischen dem Elektromotor 6 und dem Gehäuse 10 des Reibringgetriebes 2 ist nicht dargestellt.

Das Nachgetriebe 4 ist als Planetengetriebe ausgeführt, dessen Abtrieb der Planetenträger 17 ist. Der Planetenträger 17 ist drehfest mit dem Kettenrad 8 des Abtriebs der integrierten Getriebeeinheit verbunden. Der Antrieb des Planetengetriebes erfolgt über das Sonnenrad 35, während das Hohlrad 36 mit dem Gehäuse 10 drehfest verbunden ist. Eine äußere Abdeckung des Nachgetriebes 4 ist nicht dargestellt, welches vollständig geschlossen ausgeführt sein kann.

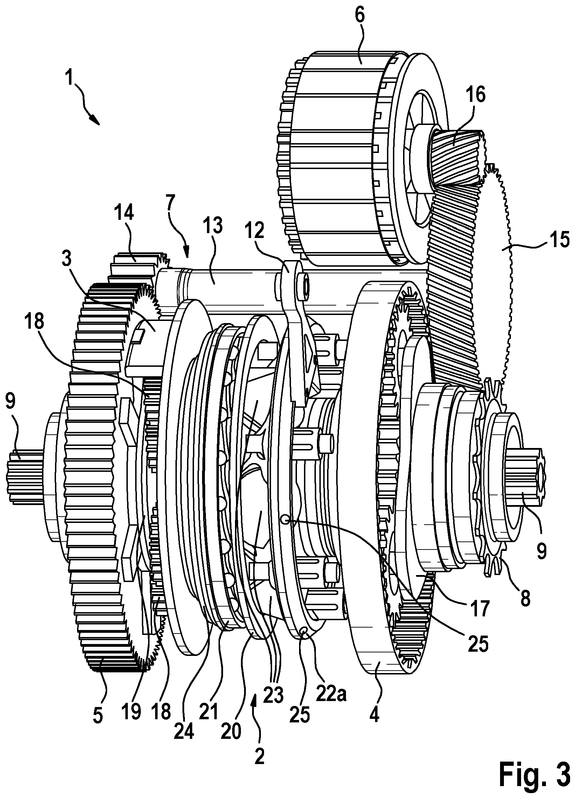

Figur 3 zeigt in einer perspektivischen Ansicht dieselbe integrierte Antriebseinheit 1 wie Figur 2, jedoch mit dem Unterschied, dass das Gehäuse 10 des Reibringgetriebes 2 weggelassen ist, sodass dessen Details sichtbar sind. Außerdem ist ein Teil des Hohlrades des als Planetengetriebe ausgeführten Vorgetriebes 3 weggelassen, sodass seine Planetenräder 18 und sein Planetenträger 19 sichtbar sind. Merkmale und Elemente, die in Figur 1 beschrieben wurden, sind mit gleichen Bezugszeichen versehen und werden nicht noch einmal gesondert beschrieben. Es sei auf Figur 1 verwiesen.

Das Reibringgetriebe 2 umfasst einen äußeren Reibring 20, welcher mit mehreren Doppelkegeln 23 in Reibeingriff steht. Die Doppelkegel 23 sind auf einem Rollenträger 22 angeordnet und laufen auf daran befestigten Achsen 25 um. Der Rollenträger 22 hat einen nicht sichtbaren Teil, der weiter im Inneren des Reibringgetriebes 2 liegt. Der äußere Reibring 20 ist mit einer Spreizkupplung 21 verbunden, welche sich wiederum über ein Axiallager 24 an einem nicht dargestellten Gehäuseteil abstützt. Die Spreizkupplung 21 spreizt sich in axialer Richtung der Kurbelwelle 9 auf, wenn ein Antriebsmoment von dem Summierzahnrad 5 auf das Reibringgetriebe 2 einwirkt. Dadurch wird der Anpressdruck zwischen dem äußeren Reibring 20 und den Doppelkegelrollen 23 erhöht. Der Verstellhebel 12 ist mit dem Rollenträger 25 verbunden, welcher in Axialrichtung der Kurbelwelle 9 verschieblich ausgeführt ist. Die Spreizkupplung 21 kann Federn umfassen oder mit Federn verbunden sein, die eine Vorspannkraft zwischen dem äußeren Reibring 20 und den Doppelkegelrollen 23 bewirken.

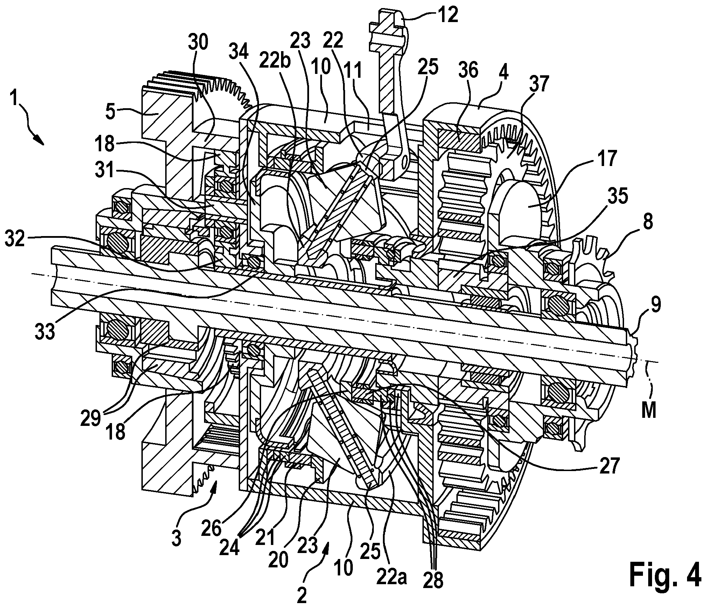

Figur 4 zeigt perspektivisch einen Querschnitt durch die integrierte Antriebseinheit 1, die in Figur 3 dargestellt ist. Der Querschnitt verläuft durch die Mittelachse M der Kurbelwelle 9 und den Verstellhebel 12. Bereits in den Figuren 2 und 3 beschriebene Merkmale und Elemente sind mit denselben Bezugsziffern bezeichnet und werden nicht noch einmal gesondert beschrieben. Es sei auf die Figuren 2 und 3 verwiesen.

In Figur 4 ist der innere Teil des Rollenträgers 22 dargestellt. Dieser ist über die Rollenachsen 25 mit dem äußeren Teil des Rollenträgers 22 verbunden. Weiter ist der innere Reibring 26 dargestellt, welcher mit den Doppelkegeln 23 in Reibeingriff steht. Dem inneren Reibring 26 ist eine Spreizkupplung 27 zugeordnet, welche sich gegen das Gehäuse 10 über ein Axiallager 28 abstützt. Die Spreizkupplung 28 ist wie die Spreizkupplung 21 so ausgelegt, dass sie bei einem auf das Summierzahnrad 5 einwirkenden Antriebsdrehmoment in Längsrichtung der Kurbelwelle 9 gespreizt wird, sodass der Anpressdruck zwischen dem inneren Reibring 26 und den Doppelkegelrollen 23 erhöht wird. Die Spreizkupplung 27 kann Federn umfassen oder mit Federn verbunden sein, die eine Vorspannkraft zwischen dem inneren Reibring 26 und den Doppelkegelrollen 23 bewirken. Der Durchmesser der Spreizkupplung 21 ist kleiner als der der Spreizkupplung 27.

Im Folgenden wird der Kraftfluss durch den in Figur 4 dargestellten Teil der Antriebseinheit 1 beschrieben. Ein Drehmoment kann über nicht dargestellte Kurbeln per Pedalkraft in die Kurbelwelle 9 eingebracht werden. Das Drehmoment in der Kurbelwelle 9 wird über einen Freilauf 29 in das Summierzahnrad 5 eingebracht. Der Freilauf 29 bewirkt, dass ein Rückwärtspedalieren möglich ist, während der Rest des dargestellten Getriebes den Umdrehungen seines Abtriebs 8 entsprechend umläuft. Das Summierzahnrad 5 ist mit dem Hohlrad 30 des Vorgetriebes 3 drehfest verbunden, sodass beide gemeinsam umlaufen. Die Planetenräder 18 des Vorgetriebes 3 sind auf Planetenwellen 31 gelagert, welche an dem Gehäuse 10 befestigt sind. Die Position der Planetenräder 18 ist somit bis auf ihre Eigendrehung fixiert. Das Sonnenrad 32 des Vorgetriebes ist mit einer Hülse 33 drehfest verbunden, die das Drehmoment von dem Sonnenrad 32 zu dem Reibringgetriebe 2 leitet. Durch die Übersetzung des Vorgetriebes 3 ist die Drehzahl der Hülse 33 höher als die Drehzahl des Summierzahnrades 5. Die Hülse 33 ist drehbar auf die Kurbelwelle 9 aufgesteckt. Auf die Hülse 33 ist eine Antriebsscheibe 34 aufgepresst, welche das Drehmoment von der Hülse 33 über die Spreizringkupplung 21 zu dem äußeren Reibring 20 weiterleitet. Das Drehmoment wird sodann auf die Doppelkegelrollen 23 übertragen. Da der Rollenträger 22 nicht drehbar, sondern nur in Längsrichtung der Kurbelwelle 9 verschieblich angeordnet ist, wird das Drehmoment von dem äußeren Reibring 20 vollständig in eine Drehung der Doppelkegelrollen 23 übertragen. Diese übertragen das Drehmoment weiter zu dem inneren Reibring 26, mit dem sie ebenfalls in Reibeingriff stehen. Über die Spreizkupplung 27 wird das Drehmoment weiter zu dem Sonnenrad 35 des Nachgetriebes 4 übertragen. Das Hohlrad 36 des Nachgetriebes 4 ist mit dem Gehäuse 10 drehfest verbunden. Das Drehmoment wird somit auf den Planetenträger 17 der Planetenräder 37 des Nachgetriebes 4 übertragen. Wie schon zuvor erwähnt, ist der Planetenträger 17 des Nachgetriebes 4 mit dem bevorzugt als Kettenrad 8 ausgeführten Abtrieb drehfest verbunden, sodass an diesem, beispielsweise über eine Kette, das Drehmoment aus der integrierten Getriebeeinheit 1 abgenommen werden kann.

Der äußere Reibring 20 und der innere Reibring 26 sind wie schon erwähnt durch jeweils zugeordnete Axiallager 24 und 28 am Gehäuse 10 abgestützt. Das Gehäuse 10 bildet in der Ausführungsform der Figuren 1 bis 3 somit eine Kraftrückflusseinrichtung für die Kräfte, die insbesondere aus den Spreizkupplungen 21 und 27 stammen. Diese Kräfte entsprechen den Presskräften auf die Doppelkegelrollen 23. Die Axiallager 24 und 28 laufen jeweils mit der Drehzahl des großen Reibringes 20 beziehungsweise des kleinen Reibringes 26. Insbesondere das Axiallager 24 des großen Reibringes erzeugt ein relativ hohes Reibmoment, weil es in vielen Betriebszuständen eine hohe Drehzahl und außerdem einen großen Reibradius aufweist.

Die Kurbelwelle 9 ist mit dem Rollenträger 22, den Axiallagern 24 und 28, den Spreizkupplungen 21 und 27 sowie mit dem kleinen Reibring 26 und dem großen Reibring 20 konzentrisch angeordnet. Außerdem sind das Vorgetriebe 3 und das Nachgetriebe 4, die beide als Planetengetriebe ausgeführt sind, konzentrisch zu der Kurbelwelle 9 angeordnet. Gleiches gilt auch für das Summierzahnrad 5 und das Kettenrad des Abtriebs 8.

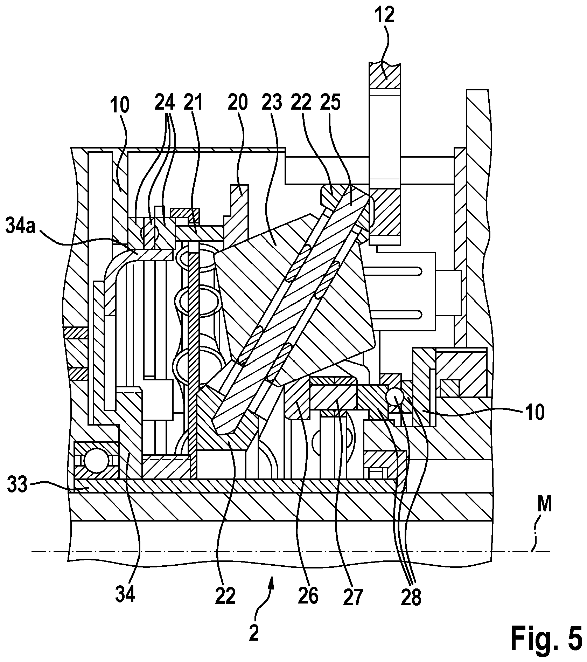

Figur 5 zeigt einen Ausschnitt aus dem in Figur 4 perspektivisch dargestellten Querschnitt, welcher das Reibringgetriebe 2 umfasst, in einer als Halbschnitt gezeigten Ansicht. Gleiche Merkmale und Elemente sind mit gleichen Bezugsziffern bezeichnet und werden nicht noch einmal gesondert beschrieben. Es sei diesbezüglich auf Figur 4 verwiesen. In Figur 5 ist gut zu erkennen, dass die Antriebsscheibe 34 einen in axiale Richtung umgebogenen Rand 34a umfasst, über welchen Drehmoment von der Hülse 33 zu der Spreizkupplung 21 geleitet wird.

## Patentansprüche

1. Reibringgetriebe (2) für ein mit Motorkraft und/oder Pedalkraft betreibbares Fahrzeug, insbesondere für ein Elektrofahrrad (100) mit einem Elektromotor (6), umfassend:
- eine Kurbelwelle (9) für Tretkurbeln (102, 103), und
- einen inneren Reibring (26) und einen äußeren Reibring (20) sowie mindestens eine auf einem Rollenträger (22) angeordnete drehbare Doppelkegelrolle (23), die mit dem inneren Reibring (26) und dem äußeren Reibring (20) in Reibeingriff steht,
**dadurch gekennzeichnet dass**
- das Reibringgetriebe (2) koaxial um die Kurbelwelle (9) herum angeordnet ist, wobei
- das Reibringgetriebe (2) ein Gehäuse (10) aufweist, das das Reibringgetriebe (10) zumindest teilweise umgibt und das im Betrieb des Reibringgetriebes (2) nicht umläuft, wobei
- das Reibringgetriebe (2) eine im Wesentlichen entlang eines im Gehäuse (10) verlaufenden und wenigstens näherungsweise geraden Verstellwegs bewegliche Verstelleinrichtung für dessen Übersetzungsverhältnis aufweist, mittels der der Rollenträger (22) in Bezug auf die Reibringe (20, 26) axial verschiebbar ist, wobei die Verstelleinrichtung durch das Gehäuse (10) hindurch verläuft und kein Verstellgewinde aufweist, wobei
- die Verstelleinrichtung nicht koaxial zu dem Reibringgetriebe verläuft.

2. Reibringgetriebe (2) nach Anspruch 1, **dadurch gekennzeichnet, dass** das Reibringgetriebe (2) ein Kettenrad (8) oder eine Riemenscheibe umfasst, welches koaxial zu der Kurbelwelle (9) angeordnet ist.

3. Reibringgetriebe (2) nach einem der vorangehenden Ansprüche, **dadurch gekennzeichnet, dass** das Reibringgetriebe (2) einen Stellmotor zur Verstellung der Verstelleinrichtung aufweist.

4. Reibringgetriebe (2) nach einem der vorangehenden Ansprüche, **dadurch gekennzeichnet, dass** dem Reibringgetriebe (2) ein Vorgetriebe (3), insbesondere ein Planetengetriebe, vorgeschaltet ist, das die Antriebsdrehzahl des Reibringgetriebes (2) gegenüber der Antriebsdrehzahl des Vorgetriebes (3) erhöht.

5. Reibringgetriebe (2) nach einem der vorangehenden Ansprüche, **dadurch gekennzeichnet, dass** dem Reibringgetriebe (2) ein Nachgetriebe (4), insbesondere ein Planetengetriebe, nachgeschaltet ist, durch das die Abtriebsdrehzahl des Reibringgetriebes (2) am Abtrieb des Nachgetriebes (4) verringert ist.

6. Reibringgetriebe (2) nach einem der vorangehenden Ansprüche, **dadurch gekennzeichnet, dass** das Reibringgetriebe (2) mehrere parallele geschaltete Freiläufe (29), insbesondere zwei oder drei Freiläufe (29), aufweist.

7. Mit Motorkraft und/oder Pedalkraft betreibbares Fahrzeug, insbesondere Elektrofahrrad (100) mit einem Elektromotor (6), **dadurch gekennzeichnet, dass** das Fahrzeug (1) ein Reibringgetriebe (2) und eine Kurbelwelle (9) aufweist, die konzentrisch zueinander angeordnet sind, wobei das Reibringgetriebe (2) ein Gehäuse (10) aufweist, das das Reibringgetriebe (10) zumindest teilweise umgibt und das im Betrieb des Reibringgetriebes (2) nicht umläuft,
wobei
- das Reibringgetriebe (2) eine im Wesentlichen entlang eines im Gehäuse (10) verlaufenden und wenigstens näherungsweise geraden Verstellwegs bewegliche Verstelleinrichtung für dessen Übersetzungsverhältnis aufweist, mittels der der Rollenträger (22) in Bezug auf die Reibringe (20, 26) axial verschiebbar ist, wobei die Verstelleinrichtung durch das Gehäuse (10) hindurch verläuft und kein Verstellgewinde aufweist, wobei
- die Verstelleinrichtung nicht koaxial zu dem Reibringgetriebe verläuft.

8. Fahrzeug nach Anspruch 7, **dadurch gekennzeichnet, dass** das Fahrzeug einen Stellmotor zur Verstellung der Verstelleinrichtung aufweist.

## Claims

1. Friction ring-type transmission (2) for a vehicle operable by motor power and/or pedal power, in particular for an electric bicycle (100) with an electric motor (6), comprising:
- a crankshaft (9) for pedal cranks (102, 103), and
- an inner friction ring (26) and an outer friction ring (20) and at least one rotatable double conical roller (23) which is arranged on a roller carrier (22) and which is in frictional engagement with the inner friction ring (26) and the outer friction ring (20),
**characterized in that**
- the friction ring-type transmission (2) is arranged coaxially around the crankshaft (9), wherein
- the friction ring-type transmission (2) has a housing (10) which at least partially surrounds the friction ring-type transmission (10) and which does not revolve during the operation of the friction ring-type transmission (2), wherein
- the friction ring-type transmission (2) has, for its transmission ratio, an adjusting device which is movable substantially along an at least approximately straight adjustment path running in the housing (10), by means of which adjusting device the roller carrier (22) is axially displaceable in relation to the friction rings (20, 26), wherein the adjusting device runs through the housing (10) and has no adjusting thread, wherein
- the adjusting device runs non-coaxially with respect to the friction ring-type transmission.

2. Friction ring-type transmission (2) according to Claim 1, **characterized in that** the friction ring-type transmission (2) comprises a sprocket (8) or a belt pulley, which is arranged coaxially with respect to the crankshaft (9).

3. Friction ring-type transmission (2) according to any of the preceding claims, **characterized in that** the friction ring-type transmission (2) has an actuating motor for adjusting the adjusting device.

4. Friction ring-type transmission (2) according to any of the preceding claims, **characterized in that**, upstream of the friction ring-type transmission (2), there is connected an upstream transmission (3), in particular a planetary transmission, which increases the drive rotational speed of the friction ring-type transmission (2) in relation to the drive rotational speed of the upstream transmission (3).

5. Friction ring-type transmission (2) according to any of the preceding claims, **characterized in that**, downstream of the friction ring-type transmission (2), there is connected a downstream transmission (4), in particular a planetary transmission, by means of which the output rotational speed of the friction ring-type transmission (2) is reduced at the output of the downstream transmission (4).

6. Friction ring-type transmission (2) according to any of the preceding claims, **characterized in that** the friction ring-type transmission (2) has multiple freewheel mechanisms (29) connected in parallel, in particular two or three freewheel mechanisms (29).

7. Vehicle operable by motor power and/or pedal power, in particular electric bicycle (100) with an electric motor (6), **characterized in that** the vehicle (1) has a friction ring-type transmission (2) and a crankshaft (9) which are arranged concentrically with respect to one another, wherein the friction ring-type transmission (2) has a housing (10) which at least partially surrounds the friction ring-type transmission (10) and which does not revolve during the operation of the friction ring-type transmission (2),
wherein
- the friction ring-type transmission (2) has, for its transmission ratio, an adjusting device which is movable substantially along an at least approximately straight adjustment path running in the housing (10), by means of which adjusting device the roller carrier (22) is axially displaceable in relation to the friction rings (20, 26), wherein the adjusting device runs through the housing (10) and has no adjusting thread, wherein
- the adjusting device runs non-coaxially with respect to the friction ring-type transmission.

8. Vehicle according to Claim 7, **characterized in that** the vehicle is an actuating motor for adjusting the adjusting device.

## Revendications

1. Transmission à anneaux de friction (2) pour un véhicule pouvant être propulsé par une force d'un moteur et/ou par une force de pédales, en particulier pour un vélo électrique (100) comprenant un moteur électrique (6), comprenant :
- un arbre à manivelle (9) pour des manivelles de pédale (102, 103) et
- un anneau de friction intérieur (26) et un anneau de friction extérieur (20) ainsi qu'au moins un rouleau biconique (23) rotatif disposé sur un support de rouleau (22), qui est en engagement par friction avec l'anneau de friction intérieur (26) et l'anneau de friction extérieur (20),
**caractérisée en ce que**
- la transmission à anneaux de friction (2) est disposée coaxialement autour de l'arbre à manivelle (9),
- la transmission à anneaux de friction (2) présentant un boîtier (10) qui entoure au moins en partie la transmission à anneaux de friction (10) et qui n'est pas entraîné en rotation pendant le fonctionnement de la transmission à anneaux de friction (2),
- la transmission à anneaux de friction (2) présentant un dispositif de réglage déplaçable essentiellement le long d'une course de déplacement s'étendant dans le boîtier (10) et au moins approximativement droite pour son rapport de démultiplication, au moyen duquel le support de rouleau (22) peut être déplacé axialement par rapport aux anneaux de friction (20, 26), le dispositif de réglage s'étendant à travers le boîtier (10) et ne présentant pas de filetage de réglage,
- le dispositif de réglage ne s'étendant pas coaxialement à la transmission à anneaux de friction.

2. Transmission à anneaux de friction (2) selon la revendication 1, **caractérisée en ce que** la transmission à anneaux de friction (2) comprend une roue dentée (8) ou une poulie qui est disposée coaxialement par rapport à l'arbre à manivelle (9) .

3. Transmission à anneaux de friction (2) selon l'une quelconque des revendications précédentes, **caractérisée en ce que** la transmission à anneaux de friction (2) présente un servomoteur pour le réglage du dispositif de réglage.

4. Transmission à anneaux de friction (2) selon l'une quelconque des revendications précédentes, **caractérisée en ce qu'**une transmission amont (3), en particulier un engrenage planétaire, est montée en amont de la transmission à anneaux de friction (2), laquelle augmente la vitesse de rotation d'entraînement de la transmission à anneaux de friction (2) par rapport à la vitesse de rotation d'entraînement de la transmission amont (3).

5. Transmission à anneaux de friction (2) selon l'une quelconque des revendications précédentes, **caractérisée en ce qu'**une transmission aval (4), en particulier un engrenage planétaire, est montée en aval de la transmission à anneaux de friction (2), laquelle permet de réduire la vitesse de rotation de prise de force de la transmission à anneaux de friction (2) au niveau de la prise de force de la transmission aval (4).

6. Transmission à anneaux de friction (2) selon l'une quelconque des revendications précédentes, **caractérisée en ce que** la transmission à anneaux de friction (2) présente plusieurs roues libres montées en parallèle (29), en particulier deux ou trois roues libres (29).

7. Véhicule pouvant être propulsé par une force d'un moteur et/ou par une force de pédales, en particulier vélo électrique (100) comprenant un moteur électrique (6), **caractérisé en ce que** le véhicule (1) présente une transmission à anneaux de friction (2) et un arbre à manivelle (9), lesquels sont disposés concentriquement l'un par rapport à l'autre, la transmission à anneaux de friction (2) présentant un boîtier (10) qui entoure au moins en partie la transmission à anneaux de friction (10) et qui n'est pas entraîné en rotation pendant le fonctionnement de la transmission à anneaux de friction (2),
- la transmission à anneaux de friction (2) présentant un dispositif de réglage déplaçable essentiellement le long d'une course de déplacement s'étendant dans le boîtier (10) et au moins approximativement droite pour son rapport de démultiplication, au moyen duquel le support de rouleau (22) peut être déplacé axialement par rapport aux anneaux de friction (20, 26), le dispositif de réglage s'étendant à travers le boîtier (10) et ne présentant pas de filetage de réglage,
- le dispositif de réglage ne s'étendant pas coaxialement à la transmission à anneaux de friction.

8. Véhicule selon la revendication 7, **caractérisé en ce que** le véhicule présente un servomoteur pour le réglage du dispositif de réglage.
